# DEMANDE DE BREVET EUROPEEN

(11) **EP 2 458 350 A1**
(43) Date de publication de la demande: **30.05.2012**
(21) Numéro de dépôt: 11290512.0
(22) Date de dépôt: 04.11.2011
(51) Int. Cl.: G01J 1/06, G01J 1/02, G01J 1/04, G05D 25/02, H05B 39/04, H05B 37/02

(54) **Cellule de mesure d'intensité lumineuse**

(30) Priorité: 26.11.2010 FR 1004603
(71) Demandeur: Legrand France, 87000 Limoges (FR); Legrand SNC, 87000 Limoges (FR)
(72) Inventeur: Gobeau, Jean-François, 87350 Panazol (FR); Bidaud, Nicolas, 87480 Saint Priest Taurion (FR); Suchaud, Nicolas, 87000 Limoges (FR)
(74) Mandataire: Orsini, Fabienne

(57) **Abrégé**

L'invention concerne une cellule de mesure (1) d'intensité lumineuse, comportant un socle (10) qui présente une fenêtre (31) d'entrée de lumière, et un capteur de lumière (51) qui est logé à l'intérieur du socle et qui est tourné vers ladite fenêtre. Selon l'invention, il est prévu à l'intérieur du socle un élément de délimitation (40) qui délimite un espace de passage (41A) du flux de lumière reçu par le capteur de lumière (51).

## Description

La présente invention concerne de manière générale le domaine des installations électriques.

Elle concerne plus particulièrement une cellule de mesure d'intensité lumineuse telle que définie dans le préambule de la revendication 1.

L'invention trouve une application particulièrement avantageuse dans la réalisation de systèmes de gestion d'éclairages, comportant une cellule de mesure pour mesurer l'intensité de la lumière extérieure, et des sources de lumière intérieures alimentées en courant avec une intensité électrique qui est fonction de l'intensité lumineuse mesurée.

### ARRIERE-PLAN TECHNOLOGIQUE

On connaît notamment du document EP 1 289 345 une cellule de mesure d'intensité lumineuse du type précité, dont le socle est fixé par l'arrière au toit d'un bâtiment et est fermé à l'avant par un couvercle hémisphérique transparent.

Dans un premier mode de réalisation, le socle de cette cellule de mesure porte en son centre un unique capteur de lumière tourné vers l'avant. Dans un second mode de réalisation, le socle porte, outre ce capteur de lumière central, trois autres capteurs de lumière latéraux tournés dans trois directions équiangles.

Cette cellule de mesure, grâce à sa situation (en altitude et à l'extérieur), permet initialement de mesurer avec précision l'intensité de la lumière extérieure, ce qui permet de réguler précisément l'intensité du courant électrique alimentant les sources de lumières prévues à l'intérieur du bâtiment.

Cette cellule de mesure est toutefois soumise aux intempéries telles que la pluie, mais également la grêle et la pollution. Son couvercle hémisphérique transparent s'obscurcit et s'abîme donc au cours du temps, ce qui à terme fausse les mesures d'intensité lumineuse et ne permet plus d'alimenter correctement en courant les sources de lumière intérieures.

Une simple couche de neige recouvrant le couvercle hémisphérique transparent risque également de fausser les mesures d'intensité de la lumière extérieure.

On connaît par ailleurs du document JP 60 021425 une cellule de mesure comportant, d'une part, un socle qui présente une fenêtre d'entrée de lumière, et, d'autre part, un capteur de lumière qui est logé à l'intérieur du socle et qui est tourné vers la fenêtre. Dans ce document, le socle loge un élément de délimitation du flux de lumière reçu par le capteur de lumière, d'axe orthogonal au plan de la fenêtre.

Cette cellule, une fois installée dans un plafond, ne permet alors pas de mesurer l'intensité de la lumière extérieure, mais seulement celle de la lumière intérieure.

### OBJET DE L'INVENTION

Afin de remédier aux inconvénients précités de l'état de la technique, la présente invention propose une cellule de mesure d'intensité lumineuse agencée pour être installée à l'intérieur d'un bâtiment et pour, malgré cela, mesurer avec précision l'intensité de la lumière extérieure.

Plus particulièrement, on propose selon l'invention une cellule de mesure d'intensité lumineuse telle que définie dans la revendication 1.

Grâce à l'élément de délimitation, la lumière reçue par le capteur de lumière provient d'une direction privilégiée. Cet élément de délimitation permet donc de sélectionner une direction selon laquelle l'intensité lumineuse sera mesurée.

Par conséquent, la cellule de mesure peut être installée à l'intérieur d'une pièce d'un bâtiment. En effet, lorsqu'elle est correctement positionnée dans cette pièce, son élément de délimitation peut mesurer la lumière extérieure au travers d'une fenêtre. La mesure réalisée restera ainsi précise et ne variera pas au cours du temps.

D'autres caractéristiques avantageuses et non limitatives de la cellule de mesure conforme à l'invention sont définies dans les revendications 2 et suivantes.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'une cellule de mesure d'intensité lumineuse selon l'invention ;
- la figure 2 est une vue en coupe selon le plan A-A de la figure 1 ;
- la figure 3 est une vue schématique en perspective de la cellule de mesure de la figure 1, sur laquelle le couvercle a été supprimé pour laisser apparaître l'élément de délimitation du flux de lumière ;
- la figure 4 est une vue homologue à celle de la figure 3, sur laquelle l'élément de délimitation a été supprimé pour laisser apparaître le capteur de lumière ;
- les figures 5 et 6 sont des vues schématiques en perspective de l'élément de délimitation de la figure 3, représenté sous deux angles différents ;
- la figure 7 est une vue schématique en perspective arrière du couvercle de la cellule de mesure de la figure 1 ; et
- la figure 8 est une vue schématique en perspective arrière de l'élément de délimitation de la figure 3 assemblé au couvercle de la figure 7.

Dans la description, les termes « avant » et « arrière » seront utilisés par rapport à la paroi sur laquelle est rapportée la cellule de mesure selon l'invention. Par exemple, lorsque la paroi sera un faux-plafond, l'avant désignera le côté tourné vers le bas et l'arrière désignera le côté tourné vers le haut.

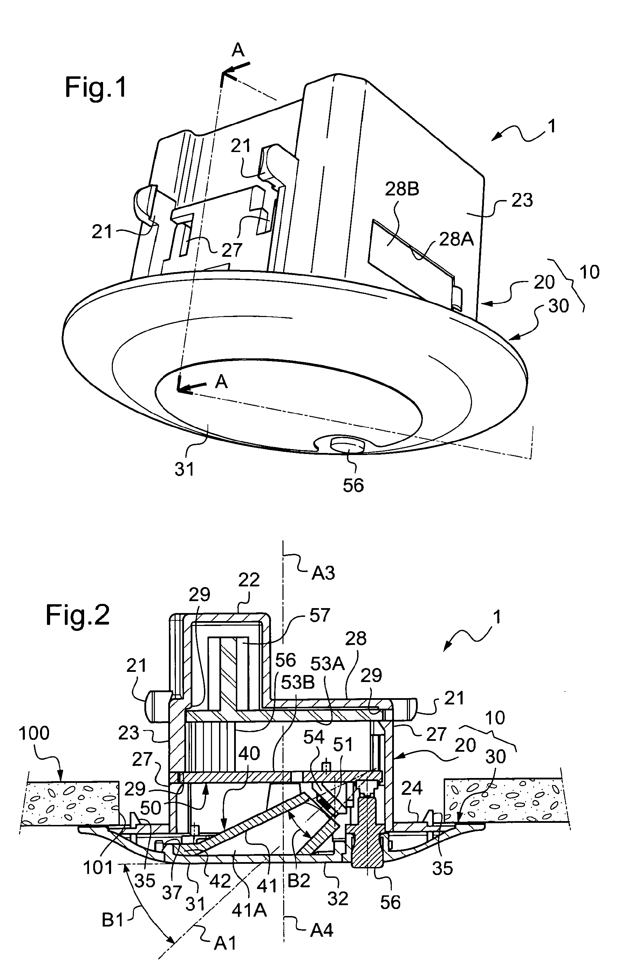

Sur la figure 1, on a représenté schématiquement une cellule de mesure 1 d'intensité lumineuse. Une telle cellule de mesure 1 peut être utilisée de diverses manières.

Cette cellule de mesure peut par exemple être utilisée dans un bâtiment comportant une pluralité de postes de travail, en vue de réduire la consommation électrique nécessitée pour l'éclairage de ces postes de travail.

Cette cellule de mesure 1 fait à cet effet partie d'un système de gestion d'éclairage global qui comporte :
- des sources de lumière pour éclairer chaque poste de travail,
- une cellule de mesure 1 pour mesurer l'intensité de la lumière extérieure, et
- une unité de pilotage de l'éclairage, qui est adaptée à délivrer une intensité électrique propre à chaque source de lumière en fonction de l'intensité lumineuse reçue et détectée par la cellule de mesure 1.

Pour effectuer une mesure efficace qui puisse renseigner précisément l'unité de pilotage de l'intensité de la lumière extérieure, la cellule de mesure 1 est fixée au plafond ou au mur de ce poste de travail, à proximité d'une vitre.

Cette cellule de mesure 1 comporte à cet effet un socle 10 qui comprend des moyens d'assujettissement 21 au mur ou au plafond, permettant de fixer la cellule à environ 2 mètres de la vitre.

Ce socle 10 est ouvert par une fenêtre 31 d'entrée de lumière à l'intérieur du socle 10.

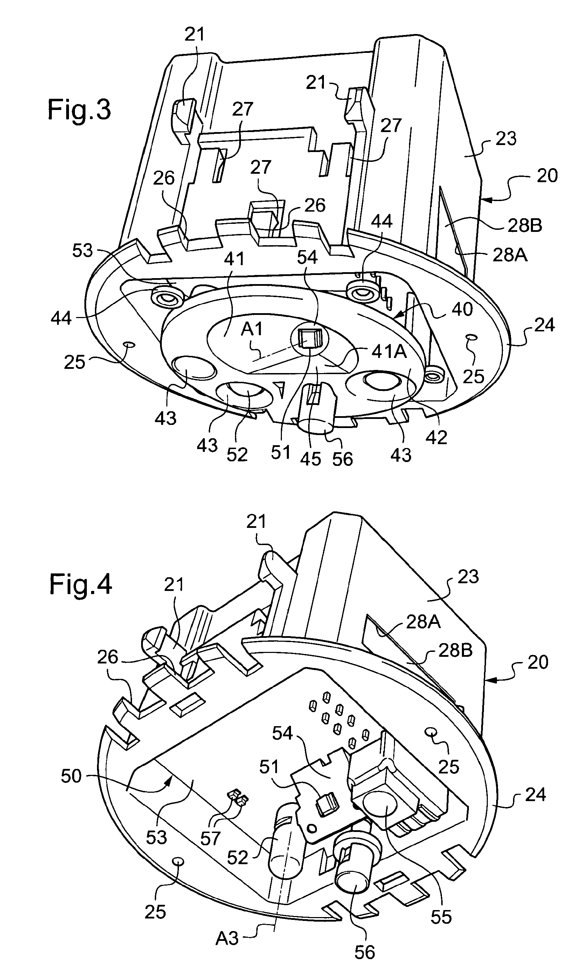

Comme le montrent les figures 2 et 3, le socle 10 loge un capteur de lumière 51 qui est orienté en direction de la fenêtre 31. Ce capteur de lumière 51 est plus précisément orienté de telle sorte qu'il peut mesurer la lumière extérieure vue au travers de la vitre afin de délivrer une tension de sortie variable en fonction de l'intensité lumineuse mesurée.

Selon une caractéristique particulièrement avantageuse de l'invention, le socle 10 loge également un élément de délimitation 40 qui délimite un espace de passage 41A du flux de lumière reçu par le capteur de lumière 51.

Cet élément de délimitation 40 permet ainsi au capteur de lumière 51 de réaliser une mesure précise de l'intensité de la lumière extérieure vue au travers de la vitre, qui n'est pas perturbée par des sources de lumière provenant de l'un ou l'autre des postes de travail.

Dans le mode de réalisation de la cellule de mesure 1 représentée sur les figures, le socle 10 est réalisé en deux parties 20, 30. Il comporte un boîtier 20 ouvert à l'avant, et un couvercle 30 qui ferme l'ouverture avant du boîtier 20.

Comme le montre la figure 4, le boîtier 20 présente une forme globalement cubique.

Il comporte une paroi de fond 22 carrée d'axe A3 et une paroi latérale 23 qui est fermée du côté de son extrémité arrière par cette paroi de fond 22 et qui est ouverte du côté de son extrémité avant.

L'extrémité avant de la paroi latérale 23 du boîtier 20 est ici bordée par un rebord périphérique 24 extérieur de forme circulaire autour de l'axe A3.

Tel que représenté sur la figure 2, ce boîtier 20 est conçu pour être encastré dans une ouverture 101 pratiquée dans un faux-plafond 100, de telle manière que la face arrière de son rebord périphérique 24 s'applique contre la face avant du faux-plafond 100.

Ses moyens d'assujettissement 21 comportent à cet effet deux paires de dents d'encliquetage, qui s'élèvent respectivement à partir de deux côtés opposés de la face extérieure de la paroi latérale 23 du boîtier 20, et dont les extrémités libres portent des griffes en vis-à-vis afin d'accueillir deux accessoires de fixation contre la paroi latérale 23 du boîtier 20.

Ces accessoires de fixation, non représentés sur les figures et qui ne font pas l'objet de la présente invention, comportent en l'espèce chacun un support agencé pour être encliqueté sur les dents d'encliquetage 21 de la paroi latérale 23 du boîtier 20, et un ressort de torsion dont un premier bras d'extrémité est bloqué contre le support et dont un second bras d'extrémité est adapté à pivoter par rapport au support.

Ces accessoires de fixation permettent, lorsque les seconds bras d'extrémité des deux ressorts de torsion sont rappelés en appui contre la face arrière du faux-plafond 100, de maintenir le boîtier 20 dans l'ouverture 101 du faux-plafond 100 de telle sorte que son rebord périphérique 24 s'applique contre la face avant du faux-plafond 100.

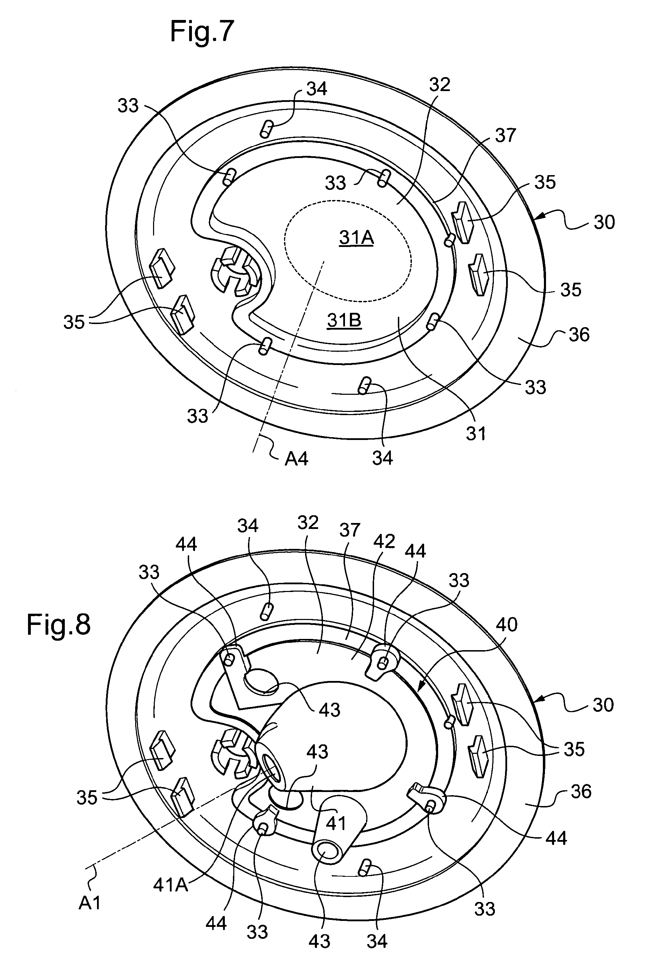

Comme le montrent plus particulièrement les figures 1 et 7, le couvercle 30 présente quant à lui une forme globale de disque autour d'un axe A4, de diamètre supérieur à celui du rebord périphérique 24 du boîtier 20. Il est ainsi adapté à recouvrir entièrement l'ouverture avant du boîtier 20 et à s'appliquer sur la face avant du faux-plafond 100, tout autour de l'ouverture 101 pratiquée dans ce faux-plafond 100.

Ici, le couvercle 30 est légèrement convexe vers l'avant pour présenter une forme esthétique. Sa face arrière présente toutefois une partie périphérique 36 qui est plane, lui permettant de s'appliquer parfaitement contre la face avant du faux-plafond 100.

L'assemblage du couvercle 30 sur le boîtier 20 est réalisé dans une position définie, de telle sorte que leurs axes A3, A4 se confonde et avec une orientation donnée du couvercle 30 par rapport au boîtier 20 autour de ces axes A3, A4.

Le couvercle 30 comporte à cet effet des moyens de centrage 34 du couvercle 30 sur le boîtier 20 dans cette position définie, ainsi que des moyens de blocage 35 du couvercle 30 sur le boîtier 20.

Les moyens de centrage sont ici formés par deux ergots 34 qui s'étendent en saillie sur la face arrière du couvercle 30, à proximité de sa partie périphérique plane 36. Ces deux ergots 34 présentent des formes de tiges d'axes parallèles à l'axe A4, situées de manière diamétralement opposée par rapport à cet axe A4.

Comme le montrent les figures 3 et 4, le rebord périphérique 24 du boîtier 20 présente en correspondance deux trous traversants 25 dans lesquels peuvent s'engager les deux ergots 34 lorsque le couvercle 30 est correctement positionné par rapport au boîtier 20.

Tels que représentés sur la figure 7, les moyens de blocage sont quant à eux formés par des moyens d'encliquetage 35.

Ces moyens d'encliquetage comportent deux paires de pattes d'encliquetage 35 qui s'élèvent à partir de la face arrière du couvercle 30, de manière diamétralement opposée par rapport à l'axe A4, et qui portent à leurs extrémités libres des griffes pour s'accrocher au boîtier 20.

Les pattes d'encliquetage 35 de chaque paire s'étendent côte à côte, à proximité de la partie périphérique plane 36 du couvercle 30, et sont orientées de telle manière que leurs griffes sont tournées vers les griffes de l'autre paire de pattes d'encliquetage.

Comme le montrent les figures 3 et 4, le rebord périphérique 24 du boîtier 20 présente en correspondance quatre découpes 26 dans lesquelles ces pattes d'encliquetage 35 peuvent s'engager de manière que leurs griffes s'accrochent à la face arrière de ce rebord périphérique 24.

Lorsque le couvercle 30 est assemblé au boîtier 20, la partie périphérique plane 36 de sa face arrière borde alors parfaitement la face arrière du rebord périphérique 24 du boîtier 20, dans le même plan. Le boîtier 20 et le couvercle 30 peuvent ainsi tous deux prendre appui sur la face avant du faux-plafond 100.

La fenêtre 31, qui permet de laisser entrer la lumière à l'intérieur du socle 10 de telle manière que le capteur de lumière 51 puisse la recevoir, est pratiquée dans le couvercle 30.

Cette fenêtre 31 présente ici une forme globalement circulaire et est centrée sur l'axe A4 du couvercle 30.

Elle pourrait éventuellement être laissée ouverte. Toutefois, ici, pour protéger le capteur de lumière 51 logé à l'intérieur du socle 10, cette fenêtre 31 est fermée par une paroi translucide 32.

Cette paroi translucide 32 est sensiblement plane et présente un contour globalement circulaire pour pouvoir parfaitement fermer la fenêtre 31.

Elle est par ailleurs bordée du côté de sa face arrière par une nervure périphérique 37 agencée pour s'appliquer sur la face arrière du couvercle 30, tout autour de la fenêtre 31. Cette nervure périphérique 37 est ici collée sur le couvercle 30 pour que la paroi translucide 32 forme une seule pièce rigide avec le couvercle.

La paroi translucide 32 est ici réalisée dans un matériau légèrement teinté, pour réduire les phénomènes de réflexion de lumière et améliorer ainsi la précision des mesures d'intensité lumineuse.

Le matériau ici utilisé est commercialisé par la société LG Chemical, sous la référence « lumiplace LB7850NP ». Il présente une teinte légèrement violette.

Comme le montre la figure 2, lorsque le couvercle 30 est assemblé au boîtier 20, la paroi translucide 32 qui ferme la fenêtre 31 s'étend dans un plan parallèle à la face avant du faux-plafond 100.

A l'intérieur du socle 10, le capteur de lumière 51 est tourné vers la fenêtre 31, dans une direction inclinée par rapport à l'axe A4, de manière à être orienté en direction de la vitre par laquelle la lumière extérieure est mesurée.

Ce capteur de lumière 51 fait partie d'un circuit électronique plus vaste, qui est conçu notamment pour alimenter le capteur et pour récupérer les données mesurées par ce capteur afin de les transmettre à l'unité de pilotage.

Comme le montre plus particulièrement la figure 2, ce circuit électronique comporte trois circuits imprimés 53A, 53B, 54 logés à l'intérieur du boîtier 20.

Les deux circuits imprimés principaux 53A, 53B sont carrés et présentent des dimensions égales, au jeu près, aux dimensions intérieures du boîtier 20. Ils sont positionnés parallèlement à la paroi de fond 22 du boîtier 20, l'un au-dessus de l'autre, et sont de ce fait appelés circuit arrière 53A et circuit avant 53B.

Pour que ces circuits imprimés principaux 53A, 53B communiquent ensemble, le circuit avant 53B comporte à l'arrière des broches 56 branchées dans des bornes de connexion prévues en correspondance sur le circuit arrière 53A.

Pour que ces circuits imprimés principaux 53A, 53B communiquent avec l'unité de pilotage, le circuit arrière 53A comporte à l'arrière une prise réseau 57 adaptée à accueillir la fiche RJ45 d'un câble réseau. Ici, comme le montre la figure 2, le boîtier 20 comporte en outre un renfoncement 28 en creux dans sa paroi arrière pour permettre à l'installateur d'accéder à la prise réseau 57.

Les deux circuits imprimés principaux 53A, 53B sont maintenus en place dans le boîtier 20 par des moyens de butée et d'encliquetage. Il est plus précisément prévu, d'une part, des butées 29 qui sont situées à l'intérieur du boîtier 20 et sur lesquelles reposent les faces arrière de ces circuits imprimés 53A, 53B, et, d'autre part, des pattes d'encliquetage 27 qui sont découpées dans la paroi latérale 23 du boîtier 20 et dont les extrémités libres arrière prennent appui contre les faces avant de ces circuits imprimés 53A, 53B.

Le troisième circuit imprimé 54 présente quant à lui une taille réduite. Il est uniquement conçu pour porter le capteur de lumière 51. Il est connecté au circuit imprimé avant 53B et est fixé sur celui-ci avec un angle d'inclinaison compris entre 40 et 50 degrés, ici égal à 45 degrés. Ainsi, une fois la cellule de mesure 1 installée dans l'ouverture 101 du faux-plafond 100, le capteur de lumière 51 est orienté suivant une direction qui forme un angle de 45 degrés avec le faux-plafond 100.

Tel que représenté sur la figure 4, le circuit avant 53B porte par ailleurs des moyens de paramétrage et des moyens de programmation du circuit électronique de la cellule de mesure 1.

Les moyens de paramétrage comportent en l'espèce une diode électroluminescente 52 d'émission de signaux infrarouges, un dôme 55 de réception de signaux infrarouges, deux diodes électroluminescentes CMS (pour « Composants Montés en Surface »), et un bouton poussoir 56 de programmation qui fait saillie au travers d'une ouverture prévue en correspondance dans le couvercle 30 pour être accessible à l'installateur.

Ces moyens de paramétrage permettent de paramétrer le circuit électronique de la cellule de mesure 1 à l'aide d'une télécommande infrarouge, de manière à établir la communication avec l'unité de pilotage.

Les moyens de programmation, non visibles sur les figures, comportent quant à eux une prise électrique fixée à l'arrière du circuit avant 53B et qui est accessible à l'installateur via une ouverture 28A pratiquée dans la paroi latérale 23 du boîtier 20. Telle que représentée sur la figure 1, cette ouverture 28A est obturée par une languette souple 28B.

Ces moyens de programmation permettent de reprogrammer au besoin le circuit électronique de la cellule de mesure 1, par exemple pour faire évoluer ses capacités fonctionnelles.

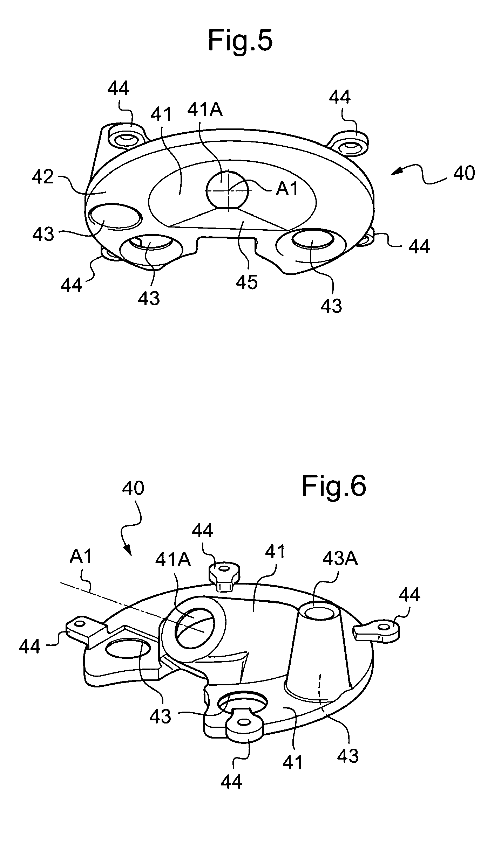

Comme le montrent les figures 5 et 6, l'élément de délimitation 40 logé à l'intérieur du socle 10 comporte, d'une part, un entonnoir 41 dont la face intérieure, dite de délimitation, délimite un espace 41A de passage d'un flux de lumière en direction du capteur de lumière 51, et, d'autre part, une couronne 42 plane qui borde extérieurement l'extrémité avant de l'entonnoir 41 pour s'appliquer contre une partie périphérique 31 B de la face arrière de la paroi translucide 32.

L'entonnoir 41 comporte plus précisément ici une fine paroi tronconique d'axe principal A1, et dont la base est tronquée à 45 degrés par rapport à cet axe principal A1 pour s'appliquer contre la face arrière de la paroi translucide 32 et dont le sommet est tronqué à angle droit par rapport à l'axe principal A1 pour s'appliquer contre le troisième circuit imprimé 54.

Comme cela apparaît sur la figure 5, la courbe directrice de cette paroi tronconique présente une forme sensiblement ovale, avec une partie droite.

Grâce à la forme ovale de la courbe directrice, l'angle d'ouverture B2 de l'entonnoir 41 est variable. Dans le plan de coupe de la figure 2 qui contient les axes A1, A3 et A4, cet angle d'ouverture B2 est sensiblement égal à 20 degrés. Dans un plan de coupe orthogonal au plan de coupe de la figure 2 et contenant l'axe A1, cet angle d'ouverture B2 est sensiblement égal à 65 degrés.

Grâce à la partie droite de la courbe directrice, l'entonnoir 41 présente intérieurement un méplat 45. Ce méplat 45 est ici tourné à l'opposé de la couronne 42.

L'entonnoir 41, qui délimite alors un espace intérieur en forme de canal tronconique, permet ainsi non seulement de réduire le flux de lumière reçu par le capteur de lumière 51, mais surtout de ne laisser passer que la lumière provenant d'une direction privilégiée (la direction de la vitre).

La couronne 42 présente quant à elle une forme sensiblement circulaire, de diamètre extérieur égal à celui de la paroi translucide 32 du couvercle 30. Elle est ici décentrée par rapport à l'extrémité avant de l'entonnoir 41 et est inclinée à 45 degrés par rapport à l'axe principal A1 de l'entonnoir 41.

Cette couronne 42 permet ainsi d'obturer une partie périphérique 31 B de la fenêtre 31 (voir figure 7) en s'appliquant contre celle-ci, la partie centrale 31A de cette fenêtre 31 restant ouverte pour permettre au flux de lumière d'entrer à l'intérieur du socle 10.

Cette couronne 42 présente dans son bord périphérique extérieur une encoche semi-circulaire, de manière que le bouton poussoir 56 puisse s'étendre depuis le circuit imprimé avant 53B jusqu'au couvercle 30.

Cette couronne 42 présente par ailleurs trois orifices 43.

Comme le montre la figure 3, deux de ces orifices 43 sont évasés vers l'avant et permettent au dôme 55 et à la diode électroluminescente 52 de déboucher à proximité du couvercle 30. Grâce à ces deux orifices 43, l'élément de délimitation 40 ne forme donc pas obstacle aux signaux infrarouges.

Comme le montre la figure 6, le troisième orifice 43 est bordé à l'arrière par une paroi tronconique 43A qui permet de guider la lumière émise par les deux diodes électroluminescentes CMS jusqu'à la paroi translucide 32. Grâce à cette paroi tronconique 43A, la lumière émise n'atteint pas le capteur de lumière 51 et ne fausse donc pas les mesures.

L'élément de délimitation 40 est installé dans le socle 10 de telle manière que l'axe principal A1 de l'entonnoir 41 s'étende orthogonalement au troisième circuit imprimé 54 et qu'il passe par le centre du capteur de lumière 51. Il est en outre positionné de telle sorte que le canal 41A s'ouvre en direction de la fenêtre 31.

L'élément de délimitation 40 est maintenu en position fixe dans le socle 10 par la paroi translucide 32 qui le prend en sandwich contre le troisième circuit imprimé 54.

De cette manière, le sommet tronqué de l'entonnoir 41 s'applique contre ce troisième circuit imprimé 54, tout autour du capteur de lumière 51, et la couronne 42 s'applique contre la face arrière de la paroi translucide 32, ce qui assure une bonne étanchéité du canal tronconique 41A vis-à-vis de la lumière.

Pour assurer un bon positionnement de l'élément de délimitation 40 par rapport au troisième circuit imprimé 54 à l'assemblage de la cellule de mesure 1, il est prévu sur l'élément de délimitation 40 et sur le couvercle 30 des moyens de positionnement 33, 44 complémentaires.

Tels que représentés sur les figures 6 et 8, les moyens de positionnement 44 prévus sur l'élément de délimitation 40 comportent quatre oeillets 44 régulièrement répartis sur le contour extérieur de la couronne 42, et qui s'étendent à partir de la face arrière de la couronne 42, parallèlement à celle-ci. Ces oeillets délimitent quatre ouvertures traversantes d'axes orthogonaux au plan de la couronne 42.

Tels que représentés sur les figures 7 et 8, les moyens de positionnement 33 prévus sur le couvercle 30 comportent quatre tiges 33 qui s'étendent à partir de la face arrière de la nervure périphérique 37 de la paroi translucide 32, orthogonalement à celle-ci, et qui sont régulièrement répartis autour de l'axe A4.

Comme le montre la figure 8, l'engagement des tiges 33 du couvercle 30 dans les ouvertures traversantes des oeillets 44 de l'élément de délimitation 40 assure ainsi un positionnement exact de l'élément de délimitation 40 par rapport au couvercle 30, et, partant, de l'élément de délimitation 40 par rapport au capteur de lumière 51.

Au montage, ces tiges 33 et oeillets 44 permettent en outre de maintenir l'élément de délimitation 40 sur le couvercle 30, ce qui facilite ensuite l'assemblage de cet ensemble sur le boîtier 20.

Ici, l'élément de délimitation 40 est réalisé d'une seule pièce par moulage d'une matière synthétique, telle que le polycarbonate.

Pour réduire les phénomènes de réflexion de la lumière, la face intérieure de l'entonnoir 41 est prévue pour absorber la lumière. La matière utilisée pour réaliser l'élément de délimitation 40 est à cet effet teintée en noir. Bien entendu, on pourrait en variante seulement revêtir la face intérieure de l'entonnoir 41 d'une couche de peinture noire.

La présente invention n'est nullement limitée aux modes de réalisation décrits et représentés, mais l'homme du métier saura y apporter toute variante conforme à son esprit.

En particulier, on pourrait prévoir que l'entonnoir soit non pas distinct du couvercle, mais qu'il forme avec celui-ci une seule et même pièce, par exemple issue de moulage.

On pourrait par ailleurs prévoir que la fenêtre soit fermée par une paroi non pas translucide, mais plutôt transparente, aux dépens toutefois de l'esthétisme de la cellule de mesure.

On pourrait également prévoir que l'espace délimité à l'intérieur de l'entonnoir présente une forme non pas parfaitement tronconique, mais qu'il soit par exemple rayé ou rainuré intérieurement. Il pourrait aussi présenter une forme cylindrique.

Selon une autre variante de l'invention, le capteur de lumière pourrait être porté non pas par un circuit imprimé incliné de manière spécifique dans le socle, mais plutôt par le circuit imprimé avant, auquel cas il serait tourné vers l'avant du boîtier.

Encore en variante, on pourrait prévoir que les moyens d'assujettissement du boîtier soient conçus, non pas pour s'accrocher à la face arrière d'un faux-plafond, mais plutôt pour coopérer avec une boîte électrique à encastrer dans un mur ou un plafond ou à rapporter en saillie sur un tel mur ou plafond.

## Revendications

1. Cellule de mesure (1) d'intensité lumineuse, comportant :
- un socle (10) qui présente une fenêtre (31) d'entrée de lumière, et
- un capteur de lumière (51) qui est logé à l'intérieur du socle (10) et qui est tourné vers ladite fenêtre (31),
- un élément de délimitation (40) logé à l'intérieur du socle (10), qui délimite un canal tronconique (41A) de passage du flux de lumière reçu par le capteur de lumière (51),
**caractérisé en ce que** ledit élément de délimitation (40) s'ouvre vers la fenêtre (31) et présente un axe principal (A1) qui forme un angle (B1) de 45 degrés avec le plan moyen de la fenêtre (31), à 5 degrés près.

2. Cellule de mesure (1) selon la revendication 1, dans laquelle ledit canal tronconique (41A) présente un angle d'ouverture (B2) maximum égal à 65 degrés, à 5 degrés près.

3. Cellule de mesure (1) selon l'une des revendications 1 et 2, dans laquelle ledit élément de délimitation (40) comporte un entonnoir (41) dont la face intérieure délimite ledit canal tronconique (41A), et une couronne (42) qui borde une extrémité libre de l'entonnoir (41) et qui obture une partie périphérique (31B) de la fenêtre (31).

4. Cellule de mesure (1) selon la revendication 3, dans laquelle le socle (10) loge un émetteur et/ou récepteur de signaux (52, 55) et dans laquelle la couronne (42) présente au moins un orifice (43) de passage dudit émetteur et/ou récepteur de signaux (52, 55).

5. Cellule de mesure (1) selon l'une des revendications 1 à 4, dans laquelle ledit élément de délimitation (40) présente une surface de délimitation dudit flux de lumière qui absorbe la lumière.

6. Cellule de mesure (1) selon l'une des revendications 1 à 5, dans laquelle ledit élément de délimitation (40) comporte des moyens de positionnement (44) qui coopèrent avec des moyens de positionnement complémentaires (33) prévus sur le socle (10).

7. Cellule de mesure (1) selon l'une des revendications 1 à 6, dans laquelle, le capteur de lumière (51) étant installé sur un circuit imprimé (54), ledit élément de délimitation (40) est maintenu en sandwich entre ledit circuit imprimé (54) et ladite fenêtre (31).

8. Cellule de mesure (1) selon l'une des revendications 1 à 7, dans laquelle le capteur de lumière (51) est installé sur un circuit imprimé (54) s'étendant dans un plan qui forme un angle de 45 degrés avec le plan moyen de la fenêtre (31), à 5 degrés près.
